**Europäisches Patentamt**

(19) **European Patent Office**

**Office européen des brevets**

(11) Publication number : **0 308 384 B1**

(12) # EUROPEAN PATENT SPECIFICATION

(45) Date of publication of patent specification :
**15.04.92 Bulletin 92/16**

(51) Int. Cl.$^5$ : **B62D 65/00**

(21) Application number : **88850302.6**

(22) Date of filing : **14.09.88**

(54) **Floating frame.**

(30) Priority : **16.09.87 SE 8703579**

(43) Date of publication of application :
**22.03.89 Bulletin 89/12**

(45) Publication of the grant of the patent :
**15.04.92 Bulletin 92/16**

(84) Designated Contracting States :
**AT BE CH DE ES FR GB GR IT LI LU NL SE**

(56) References cited :
**EP-A- 0 191 116**
**WO-A-86/02057**
**DD-A- 214 323**

(73) Proprietor : **DINOL INTERNATIONAL**
**AKTIEBOLAG**
**P.O. Box 149**
**S-281 01 Hässleholm (SE)**

(72) Inventor : **Auvoja, Anders**
**Björnbärsvägen 8**
**S-281 00 Hässleholm (SE)**

(74) Representative : **Inger, Lars Ulf Bosson**
**L + U INGER Patentbyra AB Garvaregatan 12**
**S-262 63 Ängelholm (SE)**

## Description

Technical field

The present invention relates to a device at a floating frame intended to be used at work from underneath on car chassis and car bodies and comprising a carrier being applicable between said frame and said chassis/body.

The object of the present invention is to obtain a possibility to adopt a working equipment and a car chassis/body to each other in a simple and rational way.

Background of the invention

Working with a car chassis and/or car body on a production line the chassis/body are brought forward on a line on wagons on which the chassis/body rests via a pillar or the like. At different places along such a line it occurs that work is carried out from beneath on the chassis/body. Thus most of the modern car manufacturers have today a station where a treatment of the underbody and the inner of different hollow spaces of the chassis and the body, such as beams and body holes is carried out using a rust protecting agent which is being applied through different premade openings in the chassis/body via different nozzles being brought into said hollow spaces via said openings from a platform. The platform/frame which carries these nozzles or other spraying apparatuses must hereby be arranged exactly to the chassis/body to allow the nozzles to meet and go through those openings which they are intended for.

Hitherto one has proceeded in such a way that one has had conical pins on the frame which pins have been pressed/brought into holes intended therefore in the chassis/body and forced the chassis/body in place above the frame. The chassis/body is not always in the exact correct place on its pillars but an adjustment with a few centimetres in the horizontal plane is therefor necessary. It has, however, turned out that this requires a large force due to the weight of the chassis/body and the great friction present between chassis/body and the pillars on the wagon travelling along the production line.

It has been required a more simple and efficient and less power requesting solution of the problem.

Description of the present invention

It has now surprisingly been found possible to be able to solve this problem by means of the present invention which is characterized in that a frame plate is arranged to said frame, a plate is arranged to said unit carrying said chassis/body, and a ball roller is mounted between said plates, whereby the ball roller is mounted to the frame plate by means of an outer tube, that the plate is attached to said unit, whereby the distance between said outer tube and said plate is the adjustable distance between said chassis/body and said frame.

Further characteristics are evident from the accompanying claims.

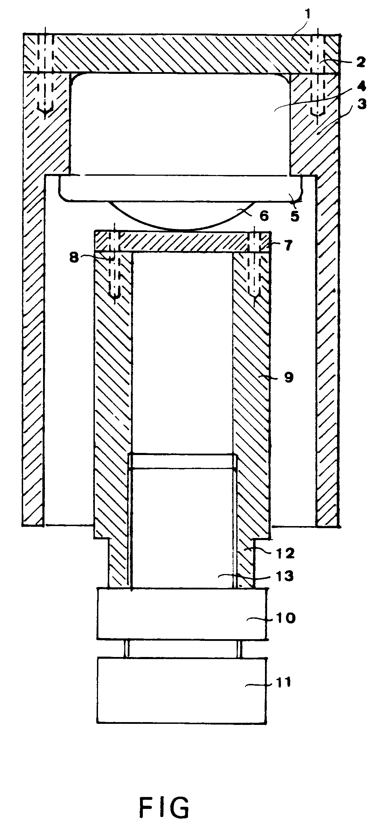

The invention will be described more in detail in the following with reference to the accompanying drawing the only figure of which shows a preferred embodiment of the invention in a sectional view along a longitudinal axis. It shall be understood that the invention is not only restricted to this embodiment but can be varied within the scope of the accompanying claims.

1 denotes a circular frame plate, which is mounted to a cylindrical outer tube 3 by means of a screw union 2. In the outer tube 3 a ball roller 4 is mounted close to the plate 1 so that the support 5 of the ball roller 4 is fixed in the outer tube 3 and that the ball 6 of the ball roller 4 faces away from the frame plate 1. The ball 6 is movably arranged against a plate 7 which is mounted to a cylindrical level adjustment means 9 by means of a screw union 8 said means 9 comprising a cylindrical part 12 and an inner screw 13 which works in cooperation with threads arranged in the cylindrical part 12, and which level adjustment means 9 is being fixed to a working platform, not shown, via a locking nut 10 and an attachment 11.

A working platform such as a jig for rust protection treatment comprises a fixedly arranged construction which includes transporting means for the wagon on which the chassis/body is travelling on a production line as well as a spraying equipment carrier being movably up and down. In the present case four units according to the above are placed in each corner of the arrangement in the connection between the fixedly arranged construction and the spraying equipment carrier. When a body on its line wagon reaches the platform it is brought in above the fixedly arranged construction and above the spraying equipment carrier. The chassis/body is now usually somewhat out of position in order to be reached by the sprayers of the carrier, i.e. those openings/holes which shall receive the rust protecting agent are somewhat out of position. When the carrier is brought into working position one or more of its conical guiding pins will first meet the chassis/body on its side underneath and be brought into the chassis/body and places the carrier right in relation to the said openings/holes by means of a rotation in the horizontal plane, whereby a minimal force need to be applied to "rotate in" the jig due to the ball roller construction arranged. The distance between the outer tube 3 and the level adjustment means 9 is hereby the adjustable distance which corresponds quite well to the normally occurring variations of the placement sideways and lengthways of the chassis/body placed on a production line.

In order to adjust the unit with regard to different models and thereby different free wheeling the level adjustment means 9 can be moved upwards or downwards in the vertical plane and be locked by the locking nut 10 in the intended place.

The plate 7 can also be made somewhat concave in order to center the carrier after each spraying. The concavity, however, means that a somewhat greater force need to be applied to move the carrier in relation to the fixedly arranged stand/construction.

It has been shown in practical tests that the present invention solves the previously noted problems in a simple and rational way.

It shall be understood that the unit need not be cylindrically shaped, even if this from mere technical, mechanical reasons is to be preferred, but can take any other suitable sectional form, such as quadratic or rectangular, or any other shape which can be dependent on those chassis/bodies to be treated.

## Claims

1. A device in a floating frame to be used at work from below on a car chassis/ body and comprising an applicable carrier between said frame and a unit for receiving said chassis/body, **characterized** in that a frame plate (1) is arranged to said frame, a plate (7) arranged to said unit carrying said chassis/body, and a ball roller (4) mounted between said plates (1,7), whereby the ball roller (4) is mounted to the frame plate (1) by means of an outer tube (3), that the plate (7) is attached to said unit, whereby the distance between said outer tube (3) and said plate (7) is the adjustable distance between said chassis/body and said frame.

## Patentansprüche

1. Vorrichtung in einem beweglichen Gestell zur Verwendung beim Arbeiten von unten an einem Fahrzeugchassis/-körper mit einem zwischen Gestell und einer Einheit zur Aufnahme des Chassis/Körpers anbringbaren Träger, **dadurch gekennzeichnet**, daß eine Gestellplatte (1) an dem Gestell angeordnet ist, eine Platte (7) an der das Chassis/den Körper tragenden Einheit angeordnet ist und eine Kugelrolle (4) zwischen den Platten (1, 7) angeordnet ist, wobei die Kugelrolle (4) an der Rahmenplatte (1) mit Hilfe eines Außenrohres (3) angeördnet ist, und daß die Platte (7) an der Einheit befestigt ist, wobei der Abstand zwischen dem Außenrohr (3) und der Platte (7) der einstellbare Abstand zwischen dem Chassis/Körper und dem Gestell ist.

## Revendications

1. Dispositif à armature ou bâti flottant, destiné à être utilisé dans des travaux se faisant depuis le dessous d'un châssis/ carrosserie de véhicule et comprenant un support applicable entre cette armature et une unité destinée à recevoir ce châssis/carrosserie, caractérisé en ce qu'un plateau d'armature (1) est agencé sur cette armature, un plateau (7) est agencé sur l'unité susdite portant le châssis/carrosserie, et un rouleau à bille (4) est monté entre ces plateaux (1, 7), ce rouleau à bille (4) étant monté sur le plateau d'armature (1) grâce à un tube extérieur (3), et en ce que le plateau (7) est attaché à l'unité susdite, de sorte que la distance entre ce tube extérieur (3) et ce plateau (7) est la distance réglable entre le châssis/carrosserie et l'armature susdite.

FIG